(19) Europäisches Patentamt / European Patent Office / Office européen des brevets

(11) **EP 3 506 064 A1**

(12) **EUROPEAN PATENT APPLICATION**
published in accordance with Art. 153(4) EPC

(43) Date of publication:
03.07.2019 Bulletin 2019/27

(51) Int Cl.:
*G06F 3/041* (2006.01)

(21) Application number: 17901319.8

(86) International application number:
PCT/CN2017/089559

(22) Date of filing: 22.06.2017

(87) International publication number:
WO 2018/232695 (27.12.2018 Gazette 2018/52)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: SHENZHEN GOODIX TECHNOLOGY
CO., LTD.
Futian Free Trade Zone, Futian
Shenzhen
Guangdong 518000 (CN)

(72) Inventors:
• PANG, Wing Ho
Shenzhen
Guangdong 518045 (CN)
• YANG, Wei
Shenzhen
Guangdong 518045 (CN)
• LIU, Songsong
Shenzhen
Guangdong 518045 (CN)
• JIANG, Haikuan
Shenzhen
Guangdong 518045 (CN)

(74) Representative: Valea AB
Box 7086
103 87 Stockholm (SE)

(54) **METHOD AND APPARATUS FOR UPDATING CURRENT REFERENCE VALUE OF TOUCH SCREEN, TOUCH SCREEN AND ELECTRONIC TERMINAL**

(57) The present application provides a method and apparatus for updating a current reference value of a touch screen, a touch screen and an electronic terminal thereof. The method includes: obtaining a current original value of a sampling node on the touch screen; determining a fitting original value of the sampling node according to a fitting relationship between a backup reference value and the current original value; calculating a fitting residual value between the fitting original value and the current original value; and judging whether a trigger condition for reference value update is satisfied according to the fitting residual value, and updating the current reference value of the touch screen if the trigger condition for reference value update is satisfied.

FIG. 1

**Description**

**TECHNICAL FIELD**

The present application relates to the touch control technical field, and in particular, relates to a method for updating a current reference value of a touch screen, an apparatus for updating a current reference value of a touch screen, and an electronic terminal thereof.

**BACKGROUND**

Coordinates of a touch position are critical to practice of input/output of a touch screen. Accordingly, in the prior art, background subtraction method is employed to calculate the touch coordinates. Using capacitive touch as an example, a specific process of calculating the touch coordinates by using the background subtraction method is as follows: when the touch screen is powered on, an original value of a capacitor on each sampling node on the touch screen is obtained, and the original value is used as a reference capacitance value of the sampling node, for example, when a power switch of a smart phone is pressed down and the screen thereof is lit, an original capacitance value corresponding to each sampling node on the touch screen of the smart phone is obtained, and then the original value is used as a reference value of the corresponding sampling node. Upon completion of power-on, when a user operates the touch screen, a current value of each sampling node on the touch screen is obtained, a capacitance variation amount is obtained by subtracting the current value from the reference value, and the variation amount identifies a current touch position of the user on the touch screen. In this way, the capacitance variation amount of each sampling node is analyzed, and thus the touch coordinates of the current touch position of the user on the touch screen may be determined.

As seen from the above, when the touch coordinates are calculated by using the background subtraction method, a reference capacitance value of the sampling node present when the touch screen is powered on needs to be used. However, in practice, the actual reference value generally deviates from the original capacitance value, and as a result, the touch coordinates corresponding to the touch position may not be accurately determined. For example, when the touch screen of the smart phone is off, and the touch screen is pressed by a foreign object, for example, the touch screen of the mobile phone is touched or pressed by a handbag of the user or an object in the pocket of the user, the touch screen will be lit and the reference value is updated if an incoming call occurs in this case. Since in this case, the reference value is a reference value when the touch screen is pressed by an object, and is an incorrect reference value, the capacitance variation amount corresponding to the sampling node may be incorrect. Consequently, the determined touch coordinates may also be incorrect, and when the user attempts to unlock the touch screen, the touch screen fails to be unlocked.

Accordingly, the prior solution is based on a prerequisite, i.e., it is theoretically assumed that the electrodes in the same touch screen are fabricated from the same material and by using the same fabrication process, and the capacitance sampling values of various sampling nodes present when the touch screen is powered on and not pressed have a regular and consistent pattern. For example, the current reference values of the sampling nodes on the same sensing channel are the same or similar, that is, the current reference values are ideally consistent. In this solution, during power-on of the touch screen, a difference of the current reference values of the capacitors on adjacent sampling nodes is calculated to obtain a reference consistency value. Upon completion of power-on, when touches are detected, a difference of the current original values of the capacitors on adjacent sampling nodes is calculated to obtain a current consistency value. Whether a difference between the current consistency value and the reference consistency value is greater than a predetermined threshold is determined. If the difference between the current consistency value and the reference consistency value is greater than the predetermined threshold, it is determined that the touch screen is pressed by a foreign object or approximately pressed by a foreign object when being powered on, and hence the current reference value of the touch screen is updated.

However, in practice, since the electrodes in the touch screen are generally fabricated from different materials and by using different fabrication process, when the touch screen is not pressed during power-on, the current reference values of the capacitors corresponding to the sampling nodes are not the same or not similar. However, when the touch screen is powered on and is pressed by a foreign object, the current reference values of the capacitors corresponding to the sampling nodes on the touch screen are somewhat regular. For example, the current reference values are the same or similar, that is, the reference consistency value is smaller. Upon completion of power-on, when the user operates the touch screen, the difference between the current consistency value and the reference consistency value corresponding to the sampling nodes is greater than the predetermined threshold, such that the current reference values of the touch screen are incorrectly updated. That is, in this case, the current reference values of the touch screen do not need to be updated, but are actually updated according to the above solution. As a result, a basis fails to be provided for calculation of the touch coordinates. Hence, the touch screen may be determined as being pressed even if the touch screen is actually not pressed, or may be determined as not being pressed even if the touch screen is actually pressed.

Therefore, how to correctly update the current reference value is a technical problem to be urgently solved in the prior art.

**SUMMARY**

The present application provides a method and apparatus for updating a current reference value of a touch screen, and an electronic terminal thereof, to overcome the above defects in the prior art.

Embodiments of the present application provide a method for updating a current reference value of a touch screen. The method includes:

obtaining a current original value of a sampling node on the touch screen;
determining a fitting original value of the sampling node according to a fitting relationship between a backup reference value and the current original value;
calculating a fitting residual value between the fitting original value and the current original value; and
judging whether a trigger condition for updating a current reference value is satisfied according to the fitting residual value, and updating the current reference value of the touch screen if the trigger condition for updating the current reference value is satisfied.

Optionally, in any one embodiment of the present application, the determining a fitting original value of the sampling node according to a fitting relationship between a backup reference value and the current original value includes: determining a model of a fitting function between the backup reference value and the current original value by using the backup reference value as a value of an independent variable and the current original value as a value of a dependent variable; and determining the fitting original value of the sampling node based on the fitting function model and the backup reference value.

Optionally, in any one embodiment of the present application, the determining a fitting original value of the sampling node according to a fitting relationship between a backup reference value and the current original value includes: determining the fitting original value of the sampling node according to fitting relationships between the backup reference values of all or part of the sampling nodes on the touch screen and the current original value.

Optionally, in any one embodiment of the present application, the determining a fitting original value of the sampling node according to a fitting relationship between a backup reference value and the current original value includes: determining the fitting original value of the sampling node according to fitting relationships between the backup reference values of all the sampling nodes on a driving channel and/or a sensing channel on the touch screen; or determining the fitting original value of the sampling node according to fitting relationships between the backup reference values of part of the sampling nodes on a driving channel and/or a sensing channel on the touch screen.

Optionally, in any one embodiment of the present application, the judging whether a trigger condition for updating a current reference value is satisfied according to the fitting residual value includes: indexing a maximum fitting residual value from all the fitting residual values, judging whether the maximum fitting residual value is not less than a fitting residual threshold, and updating the current reference value of the touch screen if the maximum fitting residual value is not less than a fitting residual threshold.

Optionally, in any one embodiment of the present application, the method further includes: determining that the touch screen is pressed when the touch screen is powered on, if it is judged that the maximum fitting residual value when the touch screen is powered on is not less than the fitting residual threshold.

Optionally, in any one embodiment of the present application, the judging whether a trigger condition for updating a current reference value is satisfied according to the fitting residual value includes: judging whether there is a sampling node whose fitting residual value is not less than a fitting residual threshold, and determining that the trigger condition for updating a current reference value is satisfied if there is a sampling node whose fitting residual value is not less than the fitting residual threshold; and the updating the current reference value of the touch screen includes: updating the current reference value when the touch screen is powered on.

Optionally, in any one embodiment of the present application, the method further includes:

determining that the corresponding current reference value is exceptional upon completion of powering on the touch screen if it is judged that there is a sampling node whose fitting residual value is not less than the fitting residual threshold upon completion of powering on the touch screen; and
the updating the current reference value of the touch screen includes: updating the current reference value upon completion of powering on the touch screen.

Optionally, in any one embodiment of the present application, the updating the current reference value of the touch screen includes: updating the current reference value based on a weighted calculation of the current original value and the current reference value.

Optionally, in any one embodiment of the present application, the updating the current reference value includes: updating the current reference values of all the sampling nodes on the touch screen, or updating the current reference values of part of the sampling nodes on the touch screen.

Optionally, in any one embodiment of the present application, the backup reference value is obtained by sampling the sampling node when the touch screen is not touched or pressed.

Embodiments of the present application further provide an apparatus for updating a current reference value of a touch screen. The apparatus includes:

an obtaining unit, configured to obtain a current original value of a sampling node on the touch screen;

a fitting unit, configured to determine a fitting original value of the sampling node according to a fitting relationship between a backup reference value and the current original value;

a calculating unit, configured to calculate a fitting residual value between the fitting original value and the current original value; and

an updating unit, configured to judge whether a trigger condition for updating a current reference value is satisfied based on the fitting residual value, and update the current reference value of the touch screen if the trigger condition for updating the current reference value is satisfied.

Embodiments of the present application further provide a touch screen. The touch screen includes a touch chip and a touch sensor; wherein the touch sensor is configured to obtain a current original value of a sampling node on the touch screen; and the touch chip is configured to: obtain the current original value of the sampling node on the touch screen, determine a fitting original value of the sampling node according to a fitting relationship between a backup reference value and the current original value, calculate a fitting residual value between the fitting original value and the current original value, judge whether a trigger condition for updating the current reference value is satisfied based on the fitting residual value, and update the current reference value of the touch screen if the trigger condition for updating the current reference value is satisfied.

Embodiments of the present application further provide an electronic terminal. The electronic terminal includes the touch screen as described above.

In the technical solutions of updating a current reference value of a touch screen according to the embodiments of the present application, a current original value of a sampling node on the touch screen is obtained; a fitting original value of the sampling node is determined according to a fitting relationship between a backup reference value and the current original value; a fitting residual value between the fitting original value and the current original value is calculated; and whether a trigger condition for updating the current reference value is satisfied is judged according to the fitting residual value, and the current reference value of the touch screen is updated if the trigger condition for updating the current reference value is satisfied. In this way, the problem of failure to provide a basis for calculation of touch coordinates due to incorrect update of the current reference value in the prior art is overcome.

## BRIEF DESCRIPTION OF THE DRAWINGS

To more clearly describe technical solutions according to the embodiments of the present application or in the prior art, drawings that are to be referred for description of the embodiments or the prior art are briefly described hereinafter. Apparently, the drawings described hereinafter merely illustrate some embodiments of the present application. Persons of ordinary skill in the art may also derive other drawings based on the drawings described herein without any creative effort.

FIG. 1 is a schematic flowchart of a method for updating a current reference value of a touch screen according to the first embodiment of the present application;

FIG. 2 is a schematic flowchart of a method for updating a current reference value of a touch screen according to the second embodiment of the present application;

FIG. 3 is a schematic flowchart of a method for updating a current reference value of a touch screen according to the third embodiment of the present application;

FIG. 4 is a schematic diagram of program modules of an apparatus for updating a current reference value of a touch screen according to the fourth embodiment of the present application; and

FIG. 5 is a schematic structural diagram of a touch screen according to the fifth embodiment of the present application.

## DETAILED DESCRIPTION

To make the objectives, technical features, and advantages of the present application clearer and more understandable, the technical solutions according to the embodiments of the present application are further described in detail with reference to the accompany drawings. Apparently, the embodiments described herein are merely some exemplary ones, rather than all the embodiments of the present application. Based on the embodiments of the present application, all other embodiments derived by persons of ordinary skill in the art without any creative efforts shall fall within the protection scope of the present application.

In the technical solutions of updating a current reference value of a touch screen according to the embodiments of the present application, a current original value of a sampling node on the touch screen is obtained; a fitting original value of the sampling node is determined according to a fitting relationship between a backup reference value and the current original value; a fitting residual value between the fitting original value and the current original value is calculated; and whether a trigger condition for updating the current reference value is satisfied is judged according to the fitting residual value, and the current reference value of the touch screen is updated if the trigger condition for updating the current reference value is satisfied. In the prior art, during difference calculation is carried out for the current reference value on adjacent sampling nodes, the current reference value has been changed. However, in the present application, the backup reference value is a reference value when there is no touch and is constant when the current reference value is updated. In this way, the problem of failure to provide a basis for calculation of touch coordinates due to incorrect update of the current reference value in the prior art is overcome.

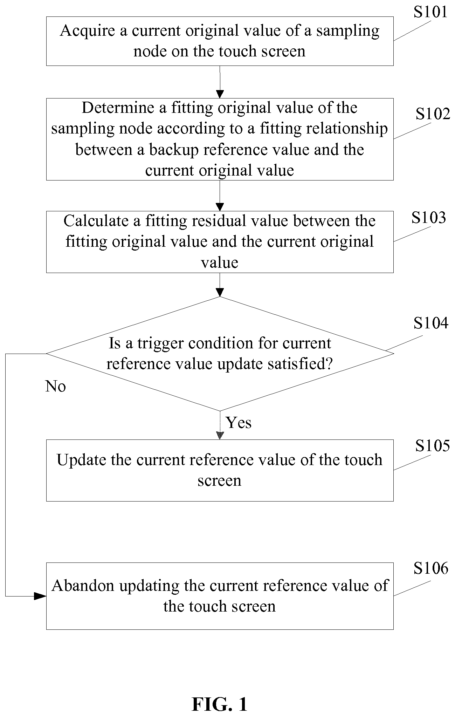

FIG. 1 is a schematic flowchart of a method for updating a current reference value of a touch screen according to the first embodiment of the present application. As illustrated in FIG. 1, the method includes the following steps:

S101: A current original value of a sampling node on the touch screen is obtained.

S102: A fitting original value of the sampling node is determined according to a fitting relationship between a backup reference value and the current original value.

In this embodiment, the backup reference value may be a sampling value obtained by sampling the sampling node when the touch screen is not touched. For example, when the touch screen is set to an output device or a smart terminal, during delivery from factory, the sampling node is sampled, and the obtained sampling value is used as the backup reference value. Therefore, the backup reference value is constant under normal conditions. However, it should be noted that the backup reference value may also be a backup reference value that is corrected in real time in consideration of impacts caused by the environment and the like.

In this embodiment, a fitting function model between the backup reference value and the current original value is specifically determined by using the backup reference value as a value of an independent variable and the current original value as a value of a dependent variable; and then the fitting original value of the sampling node is determined according to the fitting function model and the backup reference value.

Further, during determining the fitting original value of the sampling node according to the fitting relationship between the backup reference value and the current original value, the fitting original value of the sampling node may be determined according to fitting relationships between the backup reference values of all or part of the sampling nodes on the touch screen and the current original value.

Optionally, in this embodiment, the determining the fitting original value may specifically include: determining the fitting original value of the sampling node according to fitting relationships between the backup reference values of all the sampling nodes on a driving channel and/or a sensing channel on the touch screen and all the current original values; or determining the fitting original value of the sampling node according to fitting relationships between the backup reference values of part of the sampling nodes on a driving channel and/or a sensing channel on the touch screen and part of the current original values.

In other words, the fitting relationships between the backup reference values of all the sampling nodes or part of the sampling nodes corresponding to the driving channel and all the current original values are determined by using the driving channel as a unit, and thus the fitting original value of the sampling node is determined; analogously, the fitting original value of the sampling node is determined according to fitting relationships between the backup reference values of part of the sampling nodes corresponding to the sensing channel on the touch screen and part of the current original values by using the sensing channel as a unit, and thus the fitting original value of the sampling node is determined.

In this embodiment, during fitting, the fitting function model may be a linear fitting function model, or may be a non-linear fitting function model.

S103: A fitting residual value between the fitting original value and the current original value is calculated.

It should be noted that the fitting residual value is obtained by subtracting the current original value from the fitting original value and then taking an absolute value thereof.

S104: Whether a trigger condition for current updating a current reference value is satisfied is judged according to the fitting residual value, step S105 is performed if the trigger condition is satisfied, and step S106 is performed if the trigger condition is not satisfied.

In this embodiment, the trigger condition for the update is associated with the scenario where the current reference value needs to be updated, for example, when the touch screen is pressed by a foreign object or a water droplet is present on the touch screen. With respect to a capacitive screen practiced based on mutual-capacitance, when the touch screen is pressed by a foreign object or a water droplet is present on the touch screen, a mutual-capacitance on the sampling node may become smaller. In this case, the sampled current original value is smaller relative to the original value when the touch screen is not pressed by a foreign object or no water droplet is present on the touch screen. With respect to a capacitive screen practiced based on self-capacitance, the sampled current original value is greater relative to the original value when the touch screen is not pressed by a foreign substance or no water droplet is present on the touch screen. It should be noted that with respect to the capacitive screen practiced based on mutual-capacitance, it is possible that the current original value becomes greater; whereas with respect to the capacitive screen practiced based on self-capacitance, it is possible that the sampled original value becomes smaller. However, the details thereof are not given herein any further.

Accordingly, for more compatibility with the above difference situations, in this embodiment, during defining the trigger condition for the update, the trigger condition is universally defined as: judging whether the fitting residual value is not less than a fitting residual threshold, determining that the current reference value of the touch screen needs to be updated if the fitting residual value is not less than the fitting residual threshold, and otherwise, determining that the current reference value of the touch screen does not need to be updated.

In this embodiment or in another embodiment, according to the actual needs, the trigger condition for the update may also be universally defined as: judging whether the fitting residual value is greater than the fitting residual threshold, determining that the current reference value of the touch screen needs to be updated if the fitting residual value is greater than the fitting residual threshold, and otherwise, determining that the current reference value of the touch screen does not need to be updated.

In this embodiment or in another embodiment, with respect to different touch practice methods, for example, with respect to mutual-capacitance and self-capacitance, different fitting residual threshold may be defined, for example, defined by means of system automatic modification or manual modification. However, the details thereof are not given herein any further. In addition, during the practice, the fitting residual threshold is not necessarily constant, and the fitting residual threshold may be adjusted in real time.

S105: The current reference value of the touch screen is updated.

In this embodiment, when the current reference value of the touch screen is updated, the current reference values of all the sampling nodes on the touch screen are updated, or the current reference values of part of the sampling nodes on the touch screen are updated. The portion of sampling nodes at least includes the sampling points whose fitting residual values are greater than the fitting residual threshold.

In this embodiment, during the specific update, the current reference value may be updated to obtain an updated current reference value according to a weighting result of the current original value and the current reference value (or referred to as a to-be-updated current reference value). For example, the current original value and the current reference value are weighted, and the value obtained by weighting is used a new current reference value.

The current reference value before the update may be a reference value that is updated upon completion of previous power-on and before current power-on, and the current reference value upon the update may be a reference value that is obtained by updating the current reference value before the update again upon completion of current power-on and before next power-on. It should be noted that during initial update, the backup reference value may be used as the current reference value.

S106: The current reference value of the touch screen is not updated.

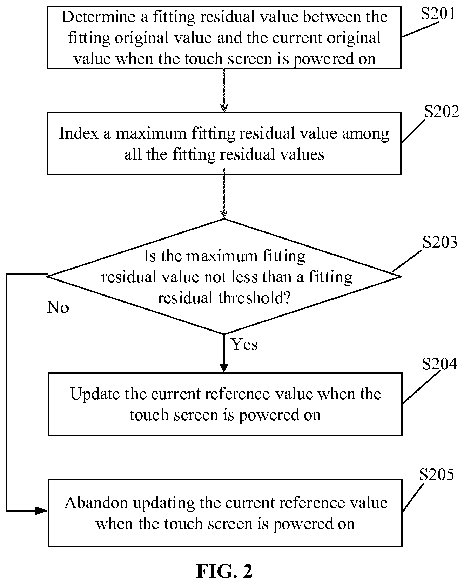

FIG. 2 is a schematic flowchart of a method for updating a current reference value of a touch screen according to the second embodiment of the present application. As illustrated in FIG. 2, the method includes the following steps: S201: A fitting residual value between the fitting original value and the current original value when the touch screen is powered on is determined.

Specifically, in this embodiment, the backup reference value is specifically obtained by sampling the sampling node when the touch screen is not touched. Table 1 lists examples of the backup reference value of a touch screen practiced based on mutual-capacitance when the touch screen according to this embodiment is powered on. Driving electrodes and sensing electrodes may be both strip-shaped electrodes. Mutual-capacitance is formed at an intersection between a driving electrode and a sensing electrode. Values in Table 1 correspond to capacitances at the sampling nodes when the touch screen is not touched.

Table 1

| Serial number | TX1 | TX2 | TX3 | TX4 | TX5 | TX6 | TX7 | TX8 |
|---|---|---|---|---|---|---|---|---|
| RX1 | 2932 | 2927 | 2932 | 2935 | 2934 | 2933 | 2939 | 2942 |
| RX2 | 2786 | 2778 | 2783 | 2789 | 2787 | 2790 | 2794 | 2798 |

(continued)

| Serial number | TX1 | TX2 | TX3 | TX4 | TX5 | TX6 | TX7 | TX8 |
|---|---|---|---|---|---|---|---|---|
| RX3 | 2708 | 2703 | 2706 | 2711 | 2712 | 2712 | 2715 | 2720 |
| RX4 | 2792 | 2788 | 2792 | 2791 | 2796 | 2798 | 2803 | 2803 |
| RX5 | 2775 | 2770 | 2777 | 2779 | 2781 | 2782 | 2790 | 2789 |
| RX6 | 2597 | 2593 | 2608 | 2604 | 2604 | 2605 | 2609 | 2609 |

Specifically, in this embodiment, the power-on state may be a process in which a power module supplies electricity to the touch screen. For example, when a power switch of a mobile phone is pressed or an incoming call occurs, the power module supplies power to the touch screen and the touch screen is lit.

Specifically, in the embodiment of the present application, the backup reference values listed in Table 1 may be stored in a non-volatile storage medium. As such, storage security is improved, and the backup reference values may be quickly and accurately obtained. The non-volatile storage medium may be a flash memory, a programmable read-only memory (PROM), a electrically alterable read-only memory (EAROM), an erasable programmable read-only memory (EPROM) or an electrically erasable programmable read-only memory (EEPROM) or the like. The non-volatile storage medium in this embodiment is specifically a flash memory.

Table 2 lists examples of the current original value when the touch screen according to this embodiment is powered on. Values in Table 2 correspond to capacitances at the sampling nodes when the touch screen is at the current time, and the values are specifically obtained by sinking a driving signal to the driving electrodes and by sensing by the sensing electrodes.

Table 2

| Serial number | TX1 | TX2 | TX3 | TX4 | TX5 | TX6 | TX7 | TX8 |
|---|---|---|---|---|---|---|---|---|
| RX1 | 2931 | 2927 | 2703 | 2937 | 2935 | 2935 | 2942 | 2943 |
| RX2 | 2784 | 2778 | 2783 | 2787 | 2788 | 2791 | 2796 | 2796 |
| RX3 | 2710 | 2703 | 2708 | 2712 | 2634 | 2712 | 2715 | 2718 |
| RX4 | 2793 | 2788 | 2795 | 2644 | 2610 | 2710 | 2804 | 2803 |
| RX5 | 2775 | 2771 | 2777 | 2778 | 2650 | 2700 | 2790 | 2788 |
| RX6 | 2599 | 2595 | 2609 | 2605 | 2604 | 2606 | 2612 | 2610 |

Specifically, in this embodiment, the backup reference values are respectively introduced into the fitting function module to obtain the fitting original values. Table 3 lists examples of the fitting original value when the touch screen according to this embodiment is powered on.

Table 3

| Serial number | TX1 | TX2 | TX3 | TX4 | TX5 | TX6 | TX7 | TX8 |
|---|---|---|---|---|---|---|---|---|
| RX1 | 2933 | 2927 | 2933 | 2919 | 2702 | 2704 | 2937 | 2942 |
| RX2 | 2786 | 2778 | 2782 | 2804 | 2824 | 2813 | 2792 | 2798 |
| RX3 | 2707 | 2702 | 2705 | 2742 | 2775 | 2743 | 2714 | 2721 |
| RX4 | 2792 | 2788 | 2792 | 2805 | 2829 | 2820 | 2801 | 2803 |
| RX5 | 2775 | 2770 | 2776 | 2796 | 2820 | 2805 | 2788 | 2789 |
| RX6 | 2595 | 2592 | 2606 | 2658 | 2704 | 2647 | 2608 | 2610 |

Specifically, since the strip-shaped electrodes are employed, one driving electrode corresponds to one driving channel, and one sensing electrodes corresponds to one sensing channel. Therefore, in this embodiment, fitting may be performed between the current original value corresponding to a sampling node on each driving channel and the backup reference value. The backup reference value of the eighth driving channel in Table 1 is used as a value of an independent variable x, and the current original value of the eighth driving electrode in Table 2 is used as a value of a dependent variable y. Fitting is performed between the value of the independent variable x and the value of the independent variable y to obtain a model of a fitting function model.

$$y=f_i^{Driver}(x), i=1,2,3,4,5,6,7,8 \quad (1)$$

After the fitting function module as illustrated in formula (1) is obtained, the backup reference value is re-used as a value of the independent variable and introduced into the formula to obtain a fitting original value. In formula (1), $f_i$ denotes the model of the fitting function corresponding to the i$^{th}$ driving electrode.

It should be noted that in another embodiment, fitting may be performed between the current original value corresponding to a sampling node on each sensing channel and the backup reference value. The backup reference value of the sixth driving channel in Table 1 is used as the value of the independent variable x, and the current original value of the sixth sensing electrode in Table 2 is used as the value of the dependent variable y. Fitting is performed between the value of the independent variable x and the value of the dependent variable y to obtain a fitting function model.

$$y=f_j^{Sensor}(x), j=1,2,3,4,5,6 \quad (2)$$

After the fitting function module as illustrated in formula (2) is obtained, the backup reference value is re-used as a value of the independent variable and introduced into the formula to obtain a fitting original value. In formula (2), $f_j$ denotes the model of the fitting function corresponding to the j$^{th}$ sensing electrode.

Table 4 lists examples of the fitting residual value when the touch screen according to this embodiment is powered on, that is, the residual values obtained by subtracting the current original value from the fitting original values in Table 3 and then taking absolute values thereof.

Table 4

| Serial number | TX1 | TX2 | TX3 | TX4 | TX5 | TX6 | TX7 | TX8 |
|---|---|---|---|---|---|---|---|---|
| RX1 | 2 | 0 | 3 | 18 | 15 | 5 | 5 | 1 |
| RX2 | 2 | 0 | 1 | 17 | 36 | 22 | 4 | 2 |
| RX3 | 3 | 1 | 3 | 30 | 141 | 31 | 1 | 3 |
| RX4 | 1 | 0 | 3 | 161 | 219 | 110 | 3 | 0 |
| RX5 | 0 | 1 | 1 | 18 | 170 | 12 | 2 | 1 |
| RX6 | 4 | 3 | 3 | 53 | 100 | 41 | 4 | 0 |

In Table 1 to Table 4, TX1 to TX8 are serial numbers of the driving electrodes, RX1 to RX6 are serial numbers of the sensing electrodes.

S202: A maximum fitting residual value among all the fitting residual values is indexed.

In this embodiment, since the touch screen is not touched when the touch screen is powered on, the current reference value may be quickly updated. To achieve this objective, the maximum fitting residual value is indexed among all the fitting residual values of all the sampling nodes, that is, the maximum fitting residual value is found from all the fitting residual values, such that whether the trigger condition for updating the current reference value is satisfied is quickly judged in step S203.

Referring to Table 4, the maximum residual value among all the fitting residual values is 219.

S203: Whether the maximum fitting residual value is not less than a fitting residual threshold is judged; if the maximum fitting residual value is not less than the fitting residual threshold, it is determined that the trigger condition for updating the current reference value is satisfied, and step S204 is continuously performed; and otherwise, it is determined that the trigger condition for updating the current reference value is not satisfied, and step S205 is continuously performed.

In this embodiment, if the fitting residual threshold is exemplarily 160, since the maximum fitting residual value is 219 which is greater than the fitting residual threshold 160, the trigger condition for the update is satisfied.

S204: The current reference value when the touch screen is powered on is updated.

Specifically, in this embodiment, during updating the current reference value, a value obtained after the current original value and the current reference value of the touch screen may be weighted may be used as an updated current reference value. The weighting is specifically as illustrated in the following formula (3):

$$Ref_{new} = (1 - \beta) Ref_{now} + \beta * Rawdata_{now} \quad (3)$$

$Ref_{new}$ is an updated current reference value, $Ref_{now}$ is a current reference value (or referred to as a to-be-updated current reference value) when the touch screen is currently powered on, $Ref_{now}$ is an updated reference value when the touch screen is previously powered on, and $Rawdata_{now}$ is a current original value. $\beta$ is an adjustable update coefficient in a value range of [0. 1]. When $\beta$ is 1, the current reference value is replaced by the current original value, that is, the current original value is directly used as the updated current reference value.

The obtained value of $Ref_{new}$ is assigned to $Ref_{PowerOn}$ to complete update of the current reference value when the touch screen is powered on.

S205: The current reference value when the touch screen is powered on is not updated.

Within the period between the power-on this time and power-on next time, coordinates of a touch point are calculated with the current reference value as a reference.

When $\beta$ in formula (3) is 0, the current reference value is not updated.

It should be noted that in the embodiment as illustrated in FIG. 2, if it is judged that the maximum fitting residual value when the touch screen is powered on is not less than the fitting residual threshold, it is determined that the touch screen is pressed by a foreign object when the touch screen is powered on; and if it is judged that the maximum fitting residual value when the touch screen is powered on is less than the fitting residual threshold, it is determined that the foreign object moves away from the touch screen. In combination with steps S201, S202 and S203, a method for judging whether the touch screen is pressed by a foreign object when the touch screen is powered on is provided. However, the details are not given herein any further.

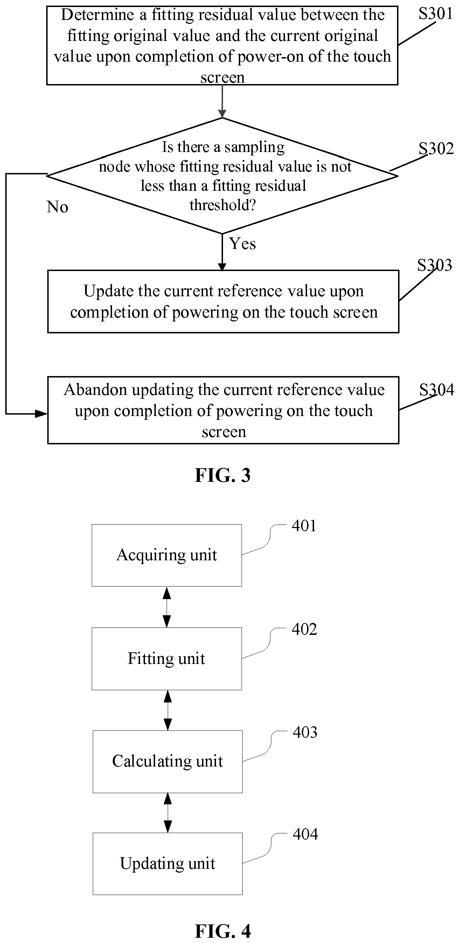

FIG. 3 is a schematic flowchart of a method for updating a current reference value of touch screen according to the third embodiment of the present application. As illustrated in FIG. 3, different from the above embodiments, in this embodiment, upon completion of powering on the touch screen, when a routine touch operation is performed for the touch screen, the current reference value is updated, which specifically includes the following steps:
S301: A fitting residual value between the fitting original value and the current original value upon completion of power-on of the touch screen is determined.

In this embodiment, those described in the embodiment illustrated in FIG. 2 are used as examples of the backup reference value, the current original value, the fitting original value and the fitting residual value.

The examples of the backup reference value of a touch screen practiced based on mutual-capacitance when the touch screen according to this embodiment is powered on are as listed in Table 1.

The examples of the current original value of a touch screen practiced based on mutual-capacitance when the touch screen according to this embodiment is powered on are as listed in Table 2.

The examples of the fitting original value of a touch screen practiced based on mutual-capacitance when the touch screen according to this embodiment is powered on are as listed in Table 3. In this embodiment, the original value fitting method is similar to that illustrated in FIG. 2, which is not described herein any further.

The examples of the fitting residual value of a touch screen practiced based on mutual-capacitance when the touch screen according to this embodiment is powered on are as listed in Table 4.

S302: Whether there is a sampling node whose fitting residual value is not less than a fitting residual threshold is judged; if there is such a sampling node, it is determined that the trigger condition for updating the current reference value is satisfied, and step S303 is continuously performed; and otherwise, it is determined that the trigger condition for updating the current reference value is not satisfied, and step S304 is continuously performed.

Like the embodiment as illustrated in FIG. 2, in this embodiment, the fitting residual threshold is still 160. Different from the above embodiment, in this embodiment, the fitting residual values of all the sampling nodes are compared one by one with the fitting residual threshold to judge whether there is a sampling node whose fitting residual value is not less than the fitting residual threshold. Specifically, as listed in Table 4, the following fitting residual values are greater than or equal to the fitting residual threshold 160: fitting residual value 161 (corresponding to the mutual-capacitance formed between TX4 and RX4), fitting residual value 219 (corresponding to the mutual-capacitance formed between TX5 and RX4), and fitting residual value 170 (corresponding to the mutual-capacitance between TX5 and RX5).

S303: The current reference value upon completion of powering on the touch screen is updated.

Specifically, in this embodiment, the value obtained after the current original value and the current reference value of the touch screen are weighted is used as a new current reference value, thereby completing the update. A second weighting is performed by using the following formula:

$$Ref_{new}=(1-\beta)Ref_{now}+\beta * Rawdata_{now} \quad (4)$$

Where $Ref_{new}$ is an updated current reference value of the touch screen, $Ref_{now}$ is a current reference value of the touch screen, that is, a to-be-updated current reference value which may be a current update data updated during the previous power-on, and $Rawdata_{now}$ is a current original value. $\beta$ is an adjustable update coefficient. When $\beta$ is 1, the updated current reference value is obtained by replacing the current reference value with the current original value, and $\beta$ is in a value range of [0, 1].

As described above, in this embodiment, the current reference values corresponding to the fitting residual values 161, 219 and 170 may be updated, the current reference values corresponding to the fitting residual values 161, 219 and 170 and within a specific range in the vicinity thereof may be updated, or all the current reference values may be updated.

S304: The current reference value upon completion of powering on the touch screen is updated.

In the practice, $\beta$ in formula (4) takes the value 0, and thus the current reference value upon completion of powering on the touch screen is not updated.

It should be noted that the current reference value subject to the environment data such as temperature, humidity and the like may be updated again by reference to the technical solution in the above embodiment. The updating is specifically performed by using the following formula (5):

$$Ref_{new}=k \times Ref_{now} \quad (5)$$

$Ref_{new}$ is an updated current reference value, $Ref_{now}$ is the current reference value, that is, a to-be-updated current reference value, k is a weight coefficient determined according to the environment data such as temperature, humidity and the like.

It should be noted that based on the above embodiment, to ensure that the current reference value of the touch screen upon completion of power-on is effective, a timing-based update mechanism may be defined for the current reference value. For example, a time interval of 100ms is defined in a timer, and when the interval expires, whether the update is needed is judged, and the current reference value of the touch screen is updated where necessary.

FIG. 4 is a schematic diagram of program modules of an apparatus for updating a current reference value of touch screen according to the fourth embodiment of the present application. As illustrated in FIG. 4, the apparatus includes:

an obtaining unit 401, configured to obtain a current original value of a sampling node on the touch screen;
a fitting unit 402, configured to determine a fitting original value of the sampling node according to a fitting relationship between a backup reference value and the current original value;
a calculating unit 403, configured to calculate a fitting residual value between the fitting original value and the current original value; and
an updating unit 404, configured to judge whether a trigger condition for updating a current reference value is satisfied according to the fitting residual value, and update the current reference value of the touch screen if the trigger condition for updating a current reference value is satisfied.

It should be noted herein that the obtaining unit 401, the fitting unit 402, the calculating unit 403 and the updating unit 404 may implement the functions further implemented in the above method embodiment, which are not described herein any further.

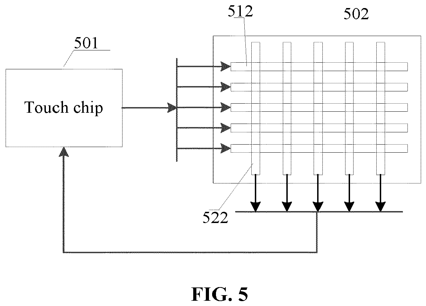

FIG. 5 is a schematic structural diagram of a touch screen according to the fifth embodiment of the present application. As illustrated in FIG. 5, the touch screen includes a touch chip 501 and a touch sensor 502. The touch sensor 502 is configured to obtain a current original value of a sampling node on the touch screen. The touch chip 501 is configured to: obtain the current original value of the sampling node on the touch screen, determine a fitting original value of the sampling node according to a fitting relationship between a backup reference value and the current original value, calculate a fitting residual value between the fitting original value and the current original value, judge whether a trigger condition for updating a current reference value is satisfied based on the fitting residual value, and update the current reference value of the touch screen if the trigger condition for updating a current reference value is satisfied.

The touch sensor 502 specifically includes a plurality of driving electrodes 512 and a plurality of sensing electrodes 522 which are distributed as being perpendicular to the driving electrodes 512. As illustrated in FIG. 5, the driving electrodes 512 are arranged along a transversal direction, and the sensing electrodes 522 are arranged along a longitudinal direction. The driving electrodes 512 and the sensing electrodes 522 form a mutual-capacitor at a converging point therebetween, and this mutual-capacitor is used as a sampling node.

The touch chip 501 inputs a driving signal having a predetermined frequency to the driving electrode 512, and the driving signal passes through the sensing electrode 522 to form a sensing signal and the sensing signal is sent back to the control chip 501. The touch chip 501 converts the sensing signal into a digital signal via an analog-to-digital converter (ADC) configured therein, parses the digital signal and generates the current original value.

In another embodiment, the touch sensor may also be based on a self-capacitor, which is not described herein any further.

An embodiment of the present application further provides an electronic terminal. The electronic terminal includes the touch screen as described in the above embodiment.

The above described device embodiments are merely for illustration purpose only. The modules which are described as separate components may be physically separated or may be not physically separated, and the components which are illustrated as modules may be or may not be physical modules, that is, the components may be located in the same position or may be distributed in a plurality of network modules. A part or all of the modules may be selected according to the actual needs to achieve the objectives of the technical solutions of the embodiments. Persons of ordinary skill in the art may understand and implement the present application without paying any creative effort.

According to the above embodiments of the present application, a person skilled in the art may clearly understand that the embodiments of the present application may be implemented by means of hardware or by means of software plus a necessary general hardware platform. Based on such understanding, portions of the technical solutions of the present application that essentially contribute to the related art may be embodied in the form of a software product, the computer software product may be stored in a computer readable storage medium. The computer-readable storage medium includes any mechanism for storing or transferring information in a computer readable form. For example, the computer-readable medium includes a read-only memory (ROM), a random access memory (RAM), a disk storage medium, an optical storage medium, a flash storage medium, electricity, light, sound and other forms of propagation signals (for example, a carrier, an infrared signal, a digital signal and the like), and the like. The computer software product includes several instructions for instructing a computer device (which may be a personal computer, a server, or a network device) to perform all the embodiments or some parts of the embodiments.

Finally, it should be noted that the above embodiments are merely intended to describe the technical solutions of the embodiments of the present application, instead of limiting the present application. Although the present application is described in detail with reference to the above embodiments, persons of ordinary skill in the art should understand that various modifications may be made to the technical solutions described in the above embodiments or equivalent replacements may be made to some technical features thereof, without departing from the spirit and scope of the technical solutions of the embodiments of the present application.

**Claims**

1. A method for updating a current reference value of a touch screen, comprising:

   obtaining a current original value of a sampling node on the touch screen;
   determining a fitting original value of the sampling node based on a fitting relationship between a backup reference value and the current original value;
   calculating a fitting residual value between the fitting original value and the current original value; and
   judging whether a trigger condition for updating the current reference value is satisfied based on the fitting residual value, and updating the current reference value if the trigger condition for updating the reference value is satisfied.

2. The method according to claim 1, wherein the determining a fitting original value of the sampling node based on a fitting relationship between a backup reference value and the current original value comprises: determining a model of a fitting function between the backup reference value and the current original value by using the backup reference value as a value of an independent variable and the current original value as a value of a dependent variable; and determining the fitting original value of the sampling node based on the fitting function model and the backup reference value.

3. The method according to claim 1, wherein the determining a fitting original value of the sampling node based on a fitting relationship between a backup reference value and the current original value comprises: determining the fitting original value of the sampling node based on fitting relationships between the backup reference values of all or part of the sampling nodes on the touch screen and the current original value.

4. The method according to claim 3, wherein the determining a fitting original value of the sampling node based on a fitting relationship between a backup reference value and the current original value comprises: determining the fitting original value of the sampling node based on fitting relationships between the backup reference values of all the sampling nodes on a driving channel and/or a sensing channel on the touch screen and all the current original values; or determining the fitting original value of the sampling node based on fitting relationships between the backup reference values of part of the sampling nodes on a driving channel and/or a sensing channel on the touch screen and part of the current original values.

5. The method according to claim 1, wherein the judging whether a trigger condition for updating the current reference value is satisfied based on the fitting residual value comprises: indexing a maximum fitting residual value from all the fitting residual values, judging whether the maximum fitting residual value is not less than a fitting residual threshold, and updating the current reference value of the touch screen if the maximum fitting residual value is not less than the fitting residual threshold.

6. The method according to claim 5, further comprising: determining that the touch screen is pressed when the touch screen is powered on, if it is judged that the maximum fitting residual value when the touch screen is powered on is not less than the fitting residual threshold.

7. The method according to claim 1, wherein the judging whether a trigger condition for updating the current reference value is satisfied based on the fitting residual value comprises: judging whether there is a sampling node whose fitting residual value is not less than a fitting residual threshold, and determining that the trigger condition for updating the current reference value is satisfied if there is a sampling node whose fitting residual value is not less than the fitting residual threshold; and the updating the current reference value of the touch screen comprises: updating the current reference value when the touch screen is powered on.

8. The method according to claim 7, further comprising: if it is judged that there is a sampling node whose fitting residual value is not less than the fitting residual threshold upon completion of powering on the touch screen, determining that the current reference value corresponding to the residual value is abnormal upon completion of powering on the touch screen; and
the updating the current reference value of the touch screen comprises: updating the current reference value upon completion of powering on the touch screen.

9. The method according to claim 1, wherein the updating the current reference value of the touch screen comprises: updating the current reference value based on a weighted calculation of the current original value and the current reference value.

10. The method according to claim 1, wherein the updating the current reference value comprises: updating the current reference values of all the sampling nodes on the touch screen, or updating the current reference values of part of the sampling nodes on the touch screen.

11. The method according to any one of claims 1 to 10, wherein the backup reference value is obtained by sampling the sampling node when the touch screen is not touched or pressed.

12. An apparatus for updating a current reference value of a touch screen, comprising:

  an obtaining unit, configured to obtain a current original value of a sampling node on the touch screen;
  a fitting unit, configured to determine a fitting original value of the sampling node based on a fitting relationship between a backup reference value and the current original value;
  a calculating unit, configured to calculate a fitting residual value between the fitting original value and the current original value; and
  an updating unit, configured to judge whether a trigger condition for updating the current reference value is satisfied based on the fitting residual value, and update the current reference value of the touch screen if the trigger condition for updating the current reference value is satisfied.

13. A touch screen, comprising a touch chip and a touch sensor; wherein the touch sensor is configured to obtain a current original value of a sampling node on the touch screen; and the touch chip is configured to: obtain the current original value of the sampling node on the touch screen, determine a fitting original value of the sampling node based on a fitting relationship between a backup reference value and the current original value, calculate a fitting residual value between the fitting original value and the current original value, judge whether a trigger condition for updating the current reference value is satisfied based on the fitting residual value, and update the current reference value if the trigger condition for updating the current reference value is satisfied.

14. An electronic terminal, comprising a touch screen as defined in claim 13.

Acquire a current original value of a sampling node on the touch screen — S101

Determine a fitting original value of the sampling node according to a fitting relationship between a backup reference value and the current original value — S102

Calculate a fitting residual value between the fitting original value and the current original value — S103

Is a trigger condition for current reference value update satisfied? — S104

No

Yes

Update the current reference value of the touch screen — S105

Abandon updating the current reference value of the touch screen — S106

**FIG. 1**

Determine a fitting residual value between the fitting original value and the current original value when the touch screen is powered on — S201

Index a maximum fitting residual value among all the fitting residual values — S202

Is the maximum fitting residual value not less than a fitting residual threshold? — S203

No

Yes

Update the current reference value when the touch screen is powered on — S204

Abandon updating the current reference value when the touch screen is powered on — S205

**FIG. 2**

Determine a fitting residual value between the fitting original value and the current original value upon completion of power-on of the touch screen ⟶ S301

Is there a sampling node whose fitting residual value is not less than a fitting residual threshold? ⟶ S302

No

Yes

Update the current reference value upon completion of powering on the touch screen ⟶ S303

Abandon updating the current reference value upon completion of powering on the touch screen ⟶ S304

**FIG. 3**

Acquiring unit ⟶ 401

Fitting unit ⟶ 402

Calculating unit ⟶ 403

Updating unit ⟶ 404

**FIG. 4**

**FIG. 5**

# INTERNATIONAL SEARCH REPORT

| International application No. |
| --- |
| PCT/CN2017/089559 |

## A. CLASSIFICATION OF SUBJECT MATTER

G06F 3/041 (2006.01) i

According to International Patent Classification (IPC) or to both national classification and IPC

## B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 触摸, 触控, 基准, 原始, 拟合, 更新, touch, base, original, update

## C. DOCUMENTS CONSIDERED TO BE RELEVANT

| Category* | Citation of document, with indication, where appropriate, of the relevant passages | Relevant to claim No. |
| --- | --- | --- |
| X | CN 102968217 A (SHENZHEN GOODIX TECHNOLOGY CO., LTD.) 13 March 2013 (13.03.2013), description, paragraphs [0003]-[0080], and figures 1-3 | 1-14 |
| A | CN 102520819 A (SUZHOU PIXCIR MICROELECTRONICS CO., LTD.) 27 June 2012 (27.06.2012), entire document | 1-14 |
| A | CN 102722286 A (SHENZHEN GOODIX TECHNOLOGY CO., LTD.) 10 October 2012 (10.10.2012), entire document | 1-14 |
| A | CN 101976135 A (SUZHOU PIXCIR MICROELECTRONICS CO., LTD.) 16 February 2011 (16.02.2011), entire document | 1-14 |
| A | US 2010060609 A1 (HITACHI DISPLAYS, LTD.) 11 March 2010 (11.03.2010), entire document | 1-14 |

☐ Further documents are listed in the continuation of Box C.      ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 09 March 2018 | 21 March 2018 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>LIU, Jing<br><br>Telephone No. (86-10) 53961452 |

Form PCT/ISA/210 (second sheet) (July 2009)

## INTERNATIONAL SEARCH REPORT
Information on patent family members

International application No.

PCT/CN2017/089559

| Patent Documents referred in the Report | Publication Date | Patent Family | Publication Date |
|---|---|---|---|
| CN 102968217 A | 13 March 2013 | CN 102968217 B | 20 January 2016 |
| | | WO 2014086211 A1 | 12 June 2014 |
| CN 102520819 A | 27 June 2012 | None | |
| CN 102722286 A | 10 October 2012 | CN 102722286 B | 31 December 2014 |
| | | WO 2013181975 A1 | 12 December 2013 |
| | | US 2015081249 A1 | 19 March 2015 |
| CN 101976135 A | 16 February 2011 | None | |
| US 2010060609 A1 | 11 March 2010 | US 8847914 B2 | 30 September 2014 |
| | | JP 5055231 B2 | 24 October 2012 |
| | | US 8542213 B2 | 24 September 2013 |
| | | US 2014015795 A1 | 16 January 2014 |
| | | JP 2010061598 A | 18 March 2010 |

Form PCT/ISA /210 (patent family annex) (July 2009)